**Europäisches Patentamt**

**European Patent Office**

**Office européen des brevets**

(19)

(11) Veröffentlichungsnummer: **0 018 513**

**A2**

(12)

# EUROPÄISCHE PATENTANMELDUNG

(21) Anmeldenummer: **80101880.5**

(22) Anmeldetag: **09.04.80**

(51) Int. Cl.³: **B 62 J 7/04**
**B 62 J 5/20**

(30) Priorität: **26.04.79 DE 7912107 U**

(43) Veröffentlichungstag der Anmeldung:
**12.11.80 Patentblatt 80/23**

(84) Benannte Vertragsstaaten:
**AT BE CH FR GB IT LI LU NL SE**

(71) Anmelder: **ESGE- Marby GmbH + Co.**
**Braker Strasse 1**
**D-4800 Bielefeld 16(DE)**

(72) Erfinder: **Niemann, Heinz**
**Engerstrasse 136**
**D-4900 Herford(DE)**

(74) Vertreter: **Patentanwälte Dipl.-Ing. W. Scherrmann**
**Dr.-Ing. R. Rüger**
**Webergasse 3**
**D-7300 Esslingen(DE)**

(54) Gepäckträger für Zweiradfahrzeuge.

(57) Bei einem Gepäckträger für Zweiradfahrzeuge besteht das hintere Ende des die Gepäckauflagefläche enthaltenden Rahmens (1) aus einem U-förmigen Bügel (7) aus gießbarem Material, z.B. Kunststoff oder Leichtmetall.

Um einen Gepäckträger der vorgenannten Art derart weiterzubilden, daß er eine einfache Möglichkeit für die Anbringung eines Rückstrahlers bietet, ist an dem U-förmigen Bügel (7) eine nach unten weisende Platte (1o) unlösbar befestigt, an der außen ein Rückstrahler (13) anbringbar ist.

EP 0 018 513 A2

./...

Fig. 1

0018513

**Patentanwälte Dipl.-Ing. W. Scherrmann  Dr.-Ing. R. Rüger**
7300 Esslingen (Neckar), Webergasse 3, Postfach 348

8. April 1980
Gm 20 EU naeh

Telefon
Stuttgart (0711) 35 65 39
35 96 19
Telex    07 256610 smru
Telegramme Patentschutz
Esslingenneckar

- 1 -

ESGE-MARBY GmbH + Co., Braker Straße 1,
4800 Bielefeld 16

Gepäckträger für Zweiradfahrzeuge

Die Erfindung betrifft einen Gepäckträger für
Zweiradfahrzeuge mit einem die Gepäckauflagefläche enthaltenden Rahmen, dessen hinteres
Ende aus einem U-förmigen Bügel aus vergießbarem Werkstoff, z.B. Kunststoff oder Leichtmetall, besteht.

Bei den bekannten Gepäckträgern für Zweiradfahrzeuge, die einen an dem Fahrzeug anzubringenden, die Gepäckauflagefläche enthaltenden
Rahmen enthalten, der meistens aus Draht besteht, wird der durch eine vielfach durch eine
rechteckige Platte aus Kunststoff gebildete
Rückstrahler durch Verschraubung an einer Haltevorrichtung befestigt, die aus einem an der
Rückwand des Rückstrahlers die Befestigungsschrauben aufnehmenden Teil und einem von diesem rechtwinklig abgebogenen Teil besteht, der
sich über die Querstreben des Gepäckträgerrahmens erstreckt und an diesen mit Hilfe von Laschen und weiteren Schrauben befestigt ist.
Diese Art der Befestigung ist umständlich und
läßt an den Querstreben Erhebungen entstehen,

- 2 -

die für die Gepäckauflage nachteilig sind.

Aufgabe der Erfindung ist es, einen bekannten Gepäckträger der eingangs genannten Art (DE-GM 7 241 747) derart weiterzubilden, daß er eine einfache Möglichkeit für die Anbringung eines Rückstrahlers bietet.

Gemäß der Erfindung wird diese Aufgabe dadurch gelöst, daß an dem hintern U-förmigen Bügel des Gepäckträgerrahmens eine nach unten weisende Platte unlösbar befestigt ist, an der ein Rückstrahler anbringbar ist. Zweckmäßig sind der U-förmige Bügel und die Befestigungsplatte aus einem Stück geformt.

Die nach unten weisende Befestigungsplatte an dem U-förmigen Bügel beeinträchtigt nicht die Gepäckauflagefläche des Rahmens, und sie stellt auch, insbesondere wenn sie an der Hinterwand des Bügels sitzt, keine Behinderung bei der Verwendung des Bügels zum Tragen des Zweirades dar.

In der Zeichnung ist ein Ausführungsbeispiel des Gegenstandes der Erfindung dargestellt. Es zeigen

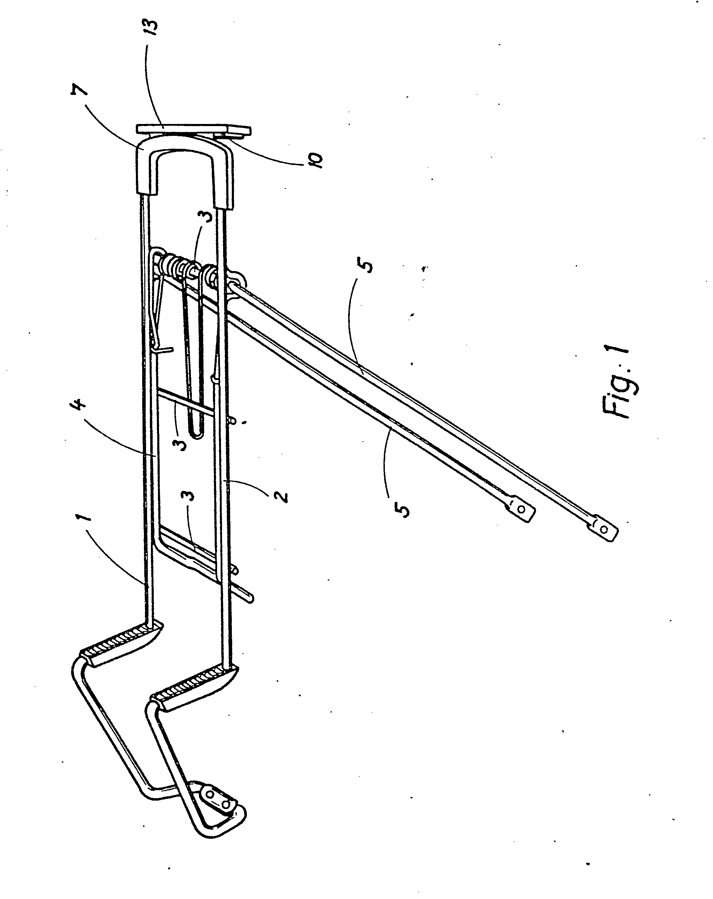

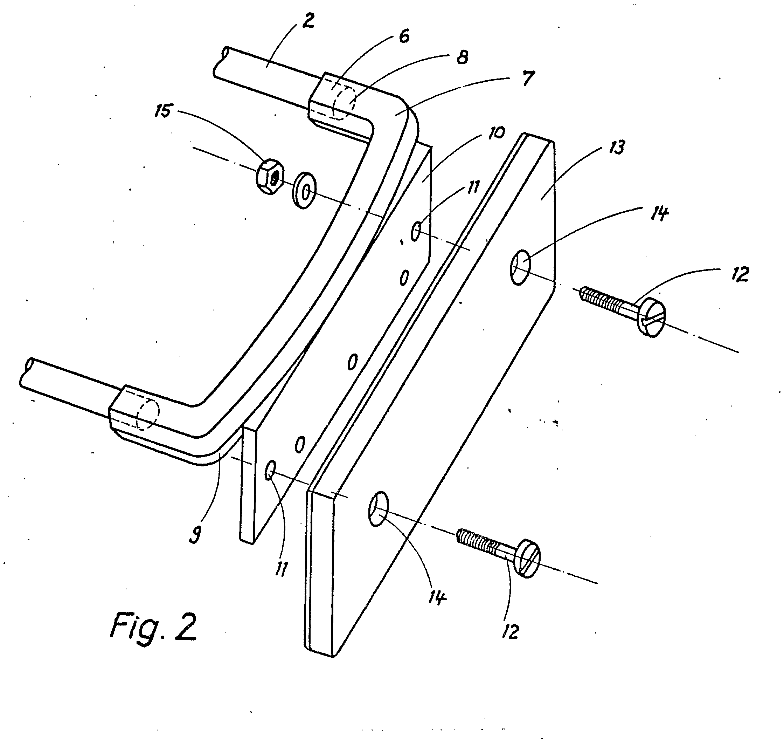

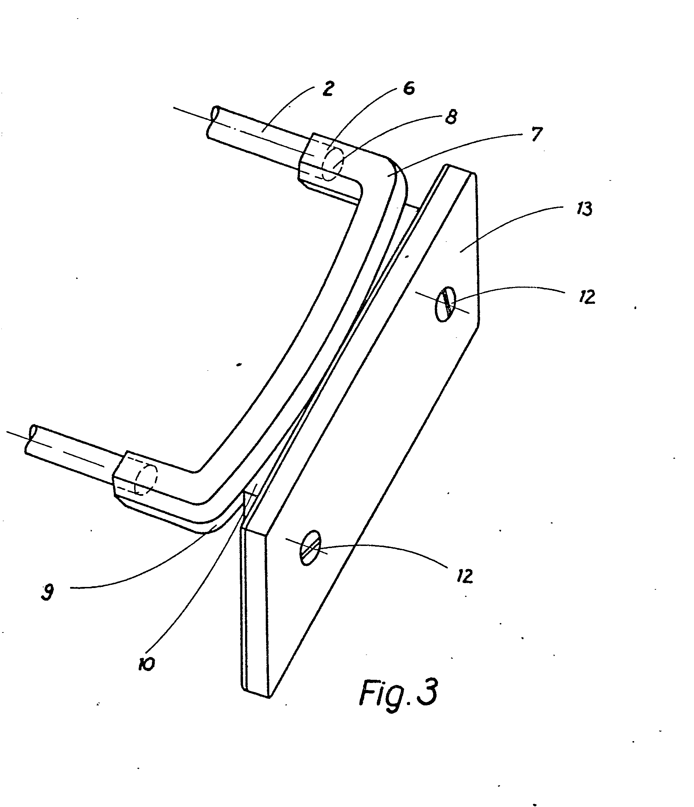

Figur 1 einen Gepäckträger gemäß der Erfindung in perspektivischer Darstellung, Figur 2 den U-förmigen Bügel des Gepäckträgers gemäß Figur 1 mit einem an ihm zu befestigenden Rückstrahler in einer Explosionsdarstellung und Figur 3 den U-förmigen Bügel mit dem an ihm befestigten Rückstrahler in perspektivischer Darstellung.

- 3 -

Der Rahmen 1 des Gepäckträgers besteht aus Längsstreben 2 und Querstreben 3. Auf der am weitesten hinten angeordneten Querstrebe ist in an sich bekannter Weise eine Federklappe 4 angeordnet, die zum Festlegen der Gepäckstücke dient. Der Rahmen 1 weist in ebenfalls bekannter Weise an seinem hinteren Teil zwei an der hinteren Querstrebe 3 angelenkte, verschwenkbare Schenkel 5 auf, die zur Abstützung des Gepäckträgers an der Hinterachse des Fahrzeuges befestigt werden können.

Auf die hinteren Enden 6 der Längsstreben 2 ist ein U-förmiger Bügel 7 aus Kunststoff aufgesteckt (Figur 2 und 3). Er ist mit den Enden 6 der Längsstreben 2 durch eine Klebemasse verbunden und weist entsprechende Bohrungen 8 auf, zu welche die Enden 6 der Längsstreben 2 eingreifen. An die Hinterwand 9 des Bügels 7 ist unten eine Befestigungsplatte 10 angeformt, die somit ebenfalls aus Kunststoff besteht. Der U-förmige Bügel 7 und die Befestigungsplatte 10, die rechtwinklig nach unten von ihm ausgeht, bilden somit ein Stück. Die Befestigungsplatte 10 weist Bohrungen 11 auf, durch welche die Befestigungsschrauben 12 für den Rückstrahler 13 hindurchgehen. Dieser besteht aus einer rechteckigen Platte, die etwa die Breite des Gepäckträgers aufweist. In dieser sind Durchgangslöcher 14 enthalten, durch welche die Befestigungsschrauben 12 aufnehmen, bevor sie die Bohrungen 11 in der Befestigungsplatte 10 durchdringen, wonach sie durch Muttern 15 gesichert sind.

- 4 -

Statt aus Kunststoff kann die durch den U-förmigen Bügel 7 und die Befestigungsplatte 10 gebildete Einheit auch aus einem anderen gießfähigen Material, z.B. Leichtmetall, bestehen.

Patentansprüche:

1. Gepäckträger für Zweiradfahrzeuge mit einem die Gepäckauflagefläche enthaltenden Rahmen, dessen hinteres Ende aus einem U-förmigen Bügel aus gießbarem Material, z.B. Kunststoff oder Leichtmetall, besteht, dadurch gekennzeichnet, daß an dem U-förmigen Bügel (7) eine nach unten weisende Platte (10) unlösbar befestigt ist, an der außen ein Rückstrahler (13) anbringbar ist.

2. Gepäckträger nach Anspruch 1, dadurch gekennzeichnet, daß die Befestigungsplatte (10) an der Hinterwand (9) des U-förmigen Bügels (7) sitzt.

3. Gepäckträger nach Anspruch 1, dadurch gekennzeichnet, daß der U-förmige Bügel (7) und die Befestigungsplatte (10) aus einem Stück geformt sind.

4. Gepäckträger nach Anspruch 2, dadurch gekennzeichnet, daß die Befestigungsplatte (10) Bohrungen (11) aufweist, durch welche die Befestigungsschrauben (12) für den Rückstrahler (13) hindurchgehen.

0018513

Fig. 1

Fig. 2

0018513

Fig.3